Europäisches Patentamt

European Patent Office

Office européen des brevets

(11) Veröffentlichungsnummer: **0 279 173 B1**

# EUROPÄISCHE PATENTSCHRIFT

(45) Veröffentlichungstag der Patentschrift: **29.04.92**

(51) Int. Cl.5: **G01B 5/28**, G01B 7/34

(21) Anmeldenummer: **88100347.9**

(22) Anmeldetag: **13.01.88**

(54) **Vorrichtung zur Messung kleiner Dickenprofiländerungen in bandförmigem Material, insbesondere fotografischem Basispapier.**

(30) Priorität: **19.02.87 DE 3705201**

(43) Veröffentlichungstag der Anmeldung:
**24.08.88 Patentblatt 88/34**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
**EP-A- 0 133 879**
**DE-A- 3 231 965**

**PATENT ABSTRACTS OF JAPAN, Band 10,
Nr. 338 (P-516)(2394), 15. November 1986; &
JP-A-61 140 817**

(73) Patentinhaber: **Felix Schoeller jr. Foto- und
Spezialpapiere GmbH & Co. KG
Burg Gretesch
W-4500 Osnabrück(DE)**

(72) Erfinder: **Vossbeck, Waldemar, Ing. grad.
Nierenburgstrasse 41
W-4532 Mettingen(DE)**
Erfinder: **Bode, Hans-Dieter
Lingener Strasse 2
W-4508 Bohmte 3(DE)**

(74) Vertreter: **Rücker, Wolfgang, Dipl.-Chem. Patentanwalt
Bergiusstrasse 2b
W-3000 Hannover 51(DE)**

EP 0 279 173 B1

**Beschreibung**

Die Erfindung betrifft eine Vorrichtung zur Messung kleiner Dickenprofiländerungen in bandförmigem Material, insbesondere fotografischer Basispapiere.

Bei der Herstellung oder Bearbeitung bandförmigen Materials, beispielsweise beim Walzen bandförmigen Gutes, entstehen durch die Spannung zwischen den Walzgerüsten oder einem Walzgerüst oder einer Haspel oder dgl. Spannungen, die zur Verformung führen können und die gemessen werden müssen, damit eine gleichbleibende Zugkraft am Bandmaterial aufrechterhalten werden kann.

Es ist daher bekannt, bei solchen Einrichtungen zum Messen der Spannung von bandförmigem Walzgut beim Walzen mittels einer zwischen zwei Walzgerüsten oder einem Walzgerüst und einer Haspel angeordneten und gegen das Walzband unter Druck anliegenden Spannungsmeßvorrichtung die gleichmäßige Verteilung der Bandspannung über die Breite des Bandes zu beiden Seiten zu überwachen, indem zu beiden Seiten des Walzbandes je eine Spannungsmeßvorrichtung angeordnet ist, welche gemeinsam eine Differentialmeß- und Anzeigevorrichtung beeinflussen (DE-PS 678 021).

Es ist ferner bekannt, bandförmiges Material hinsichtlich seines Dickenprofils über eine Vielzahl nebeneinander angeordneter Rollen laufen zu lassen, die elastisch gelagert sind und zwischen denen Tragrollen für das Bandmaterial angeordnet sind, derart, daß bei Änderungen des Profils des Bandmaterials die elastisch gelagerten Rollen ihre Lage verändern, indem sie in Berührung mit der Bandoberfläche bleiben und dadurch elektrische Steuersignale erzeugen.

Aus der DD-PS 28 194 ist es ferner bekannt, auf einer gemeinsamen Achse eine Vielzahl von Rollen schwimmend gelagert anzuordnen, die mit dem Bandmaterial in Berührung sind und den Bandzug mindestens an drei Stellen abtasten und elektrische Spannungssignale erzeugen, welche benutzt werden, um die Einstellung der Walzen zu ändern.

All diese bekannten Einrichtungen sind nicht nur sehr aufwendig, sondern eigentlich nur geeignet, bandförmiges Gut, welches in sich d. h. in seiner Dicke verformt wird, auf gleiches Dickenprofil zu steuern, indem das Herstellungswerkzeug, beispielsweise ein Walzenstuhl, gesteuert wird.

Es ist ferner bekannt (DE-OS 32 31 965), das Dickenprofil bandförmigen Materials mit einer Vorrichtung zu messen, die einen quaderförmigen Meßkopf mit einer Bohrung umfaßt, in der ein auf- und abbewegbarer federelastisch gelagerter Meßfühler angeordnet ist, der elektrische Signale erzeugt, wobei der Meßkopf und der Meßfühler mit der zu messenden Oberfläche in Berührung sind. Mit einem solchen Gerät soll es möglich sein, beispielsweise Dickenunterschiede einer beschichteten Papierbahn zu messen, die sich als Wulst dann zu erkennen geben, wenn die Papierbahn zur Rolle aufgewickelt ist. Bei dem Papier handelt es sich beispielsweise um ein fotografisches Basispapier, welches mit Polyethylen beschichtet ist.

In der Praxis hat es sich jedoch gezeigt, daß diese Vorrichtung sehr ungenau arbeitet und zuverlässige Meßergebnisse, die Rückschlüsse auf gewisse Dickenänderungen geben könnten, nicht zuläßt, insbesondere dann nicht, wenn diese Dickenänderungen klein sind und wenn der Wickel in seiner Festigkeit stark variiert.

Aufgabe der vorliegenden Erfindung ist es daher, eine Vorrichtung der eingangs genannten Art zu schaffen, mit der das Dickenprofil eines Bandmaterials, vorzugsweise eines beschichteten fotografischen Basispapiers, auch dann meßbar ist, wenn es sich um geringe Dickenänderungen handelt und die Wickelfestigkeit auf der Rolle variiert.

Gelöst wird diese Aufgabe wie im Patentanspruch 1 angegeben.

In Verfolg des Erfindungsgedankens wird nun vermittels der oben beschriebenen Vorrichtung das Dickenprofil des bandförmigen Materials in einer besonderen Verfahrensweise gemessen, indem man die Vorrichtung in axialer Richtung nicht über das bandförmige Material selbst hinwegbewegt, sondern über das bereits auf die Rolle gewickelte Bandmaterial. Die Dickenänderung zeichnet sich durch die Bildung einer Wulst, die in Umfangsrichtung der Papierrolle verläuft, nur dann ab, wenn mehrere Windungen übereinanderliegen, weil die Dickenänderung in der einzelnen Bahn so gering ist, daß sie praktisch unmeßbar ist.

Die erfindungsgemäße Vorrichtung wird also von Hand oder mechanisch, zu welchem Zweck sie in einem wagenartigen Gebilde angeordnet ist, über die Oberfläche der Rolle in axialer Richtung hinwegbewegt, wobei die Spitze des Meßfühlers und die der Rollenoberfläche zugekehrte Fläche des den Meßfühler enthaltenden Blockes die Oberfläche der Rolle abtasten.

Das den Block mit dem darin angeordneten Meßfühler enthaltende Gehäuse ruht mit seinen an den Seitenrändern angeordneten Rippen auf der Manteloberfläche der Rolle auf, beeinflußt aber nicht die Bewegung von Block und Meßfühler. Das Gehäuse stellt lediglich sicher, daß der Block mit dem Meßfühler keine Kippbewegung in radialer Richtung ausführen kann und vom wechselnden Handhabungsdruck der Vorrichtung auf die Papierrolle nicht beaufschlagt wird. Somit kann unabhängig von dem Gewicht der Vorrichtung auf der Rolle und ihrer Bewegung über die Mantelfläche der Rolle der Meßfühler und der ihn aufnehmende Block die Oberfläche abtasten.

Bedingt durch die Anordnung des Meßfühlers im Block kann der Meßfühler nicht wie bei der bekannten Vorrichtung an einer weichen Stelle der Rolle über die Unterkante des Blockes hineingeschoben werden. Hierdurch ergibt sich ein von weichen Rollenstellen unverfälschtes Diagramm.

Solche "Beulen" in einer Bahn von fotografischem Papier konnten bisher nicht vor Emulsionierung festgestellt werden. Infolgedessen waren hohe Ausschußraten an emulsioniertem Papier unvermeidlich.

Dieser Abtastvorgang, der bei der bekannten Vorrichtung durch den Auflagedruck der Vorrichtung insgesamt verfälscht wurde, geschieht nun dadurch, daß der Block mit dem Meßfühler bei Erreichung einer Wulst, die in Umfangsrichtung der Papierrolle verläuft, mit seiner Vorderkante an der Böschung der Wulst aufsteigt, der Meßfühler dabei in radialer Richtung aus dem Block mehr und mehr heraustritt, bis der Block mit seiner Vorderkante den Scheitel der Wulst erreicht hat, bei weiterer Bewegung der Meßfühler dann mehr und mehr zurücktritt, beim Erreichen des Scheitels der Wulst in den Block ganz zurückgetreten ist, nach Überschreiten des Scheitels der Wulst und nach dem Abkippen des Blockes zur anderen Seite der Wulst wieder heraustritt und sich ein entsprechender Bewegungsablauf auf der anderen Seite der Wulst wiederholt. Der Meßfühler ist dabei vorzugsweise auf der Längsmittellinie des Blockes angeordnet. Die axiale Bewegung des Meßfühlers in seinem Gehäuse erzeugt elektrische Signale, die in entsprechender Weise verarbeitet und angezeigt werden.

Die Veränderung der Dicke des Beschichtungsmaterials, z. B. des Polyethylens, auf der fotografischen Basispapierbahn, wird im wesentlichen dadurch hervorgerufen, daß sich die Lippen der Schlitzdüse und damit die Düsenbreite an bestimmten Stellen verändern, so daß dort mehr Polyethylen austritt als an anderen Stellen. Solche Dickenunterschiede können im Wickel, wenn sie bestimmte Werte überschreiten, zur Überdehnung des Papiers führen, die als "Beule" mit der Bahn verbleibt und sind beispielsweise bei der Auftragung einer fotografischen Emulsion nachteilig. Dies gilt auch für Farbemulsionen, weil auf den dickeren Stellen weniger Emulsion abgelegt wird als an anderen Stellen, so daß sich im entwickelten Bild Farbverfälschungen ergeben können.

Die Länge des Meßblockes ist für eine korrekte repräsentative Messung von gewisser Bedeutung, damit der Fühler möglichst senkrecht auf der abzutastenden Manteloberfläche aufsteht. Deshalb wäre ein unendlich langer Meßblock theoretisch am vorteilhaftesten. Es hat sich aber gezeigt, daß ausgezeichnete Ergebnisse schon erreicht werden, wenn der Meßblock eine Länge besitzt, die etwa der doppelten Basisbreite der zu erwartenden Wulst entspricht. Diese Breiten ergeben sich aus der Erfahrung. Vorzugsweise beträgt die Länge des Meßblockes, in dessen Mitte der Meßfühler angeordnet ist, ein Mehrfaches der Basisbreite der möglicherweise sich bildenden Wulst. Da solche Wulstbildungen nur hin und wieder auftreten, sind gewisse Erfahrungen bei der Beschichtung von beispielsweise fotografischem Basispapier bzw. bei der Verwendung bestimmter Düsenformen erforderlich.

Der Meßfühler an sich ist eine bekannte Einrichtung. Der Block, in dem der Meßfühler axialbeweglich angeordnet ist, besteht aus einem geeigneten Material, beispielsweise aus einem Kunststoff oder einem Metall, beispielsweise einem Leichtmetall. Die mit der Mantelfläche in Verbindung stehende Fläche des Blockes ist möglichst glatt bzw. besitzt einen geringen Reibungskoeffizienten. Es ist auch möglich, den Block aus einem Material anzufertigen, beispielsweise aus Stahl und die mit der Mantelfläche in Verbindung stehende Oberfläche zu polieren oder hart zu verchromen, so daß der Reibungswiderstand möglichst gering ist.

Die Erfindung wird nun anhand eines Ausführungsbeispiels, welches in der Zeichnung schematisch dargestellt ist, näher erläutert.

Fig. 1     zeigt im Längsschnitt und schematisch eine erfindungsgemäße Vorrichtung,

Fig. 2     einen Querschnitt auf der Linie A-B der Fig. 1 und

Fig. 3     schematisch den Meßvorgang, wobei der Meßfühler und der diesen enthaltende Block ebenfalls schematisch dargestellt sind.

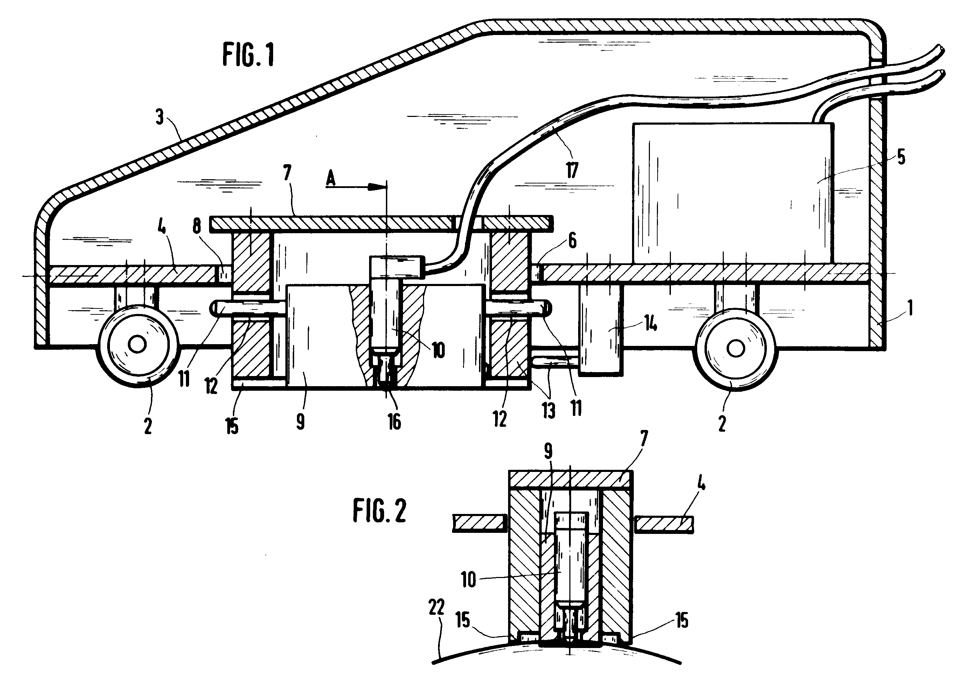

Wie aus Fig. 1 hervorgeht, ist die Meßvorrichtung selbst in einem wagenartigen (Gestell 1 angeordnet, das mit Rädern 2 versehen ist. Das wagenartige Gestell 1 ist mit einer Abdeckung 3 versehen, die gleichzeitig, wie das später noch erläutert werden wird, als Handhabung dient. Innerhalb des Gestells 1 ist ein Boden 4 angeordnet, auf dem elektrische Einrichtungen 5, die für den Meßvorgang oder dgl. erforderlich sind, vorgesehen sind. In dem Boden 4 ist eine Ausnehmung 6 vorhanden, in der ein Gehäuse 7 gelagert ist, das ein gewisses Spiel, wie bei 8 ersichtlich, besitzt und sich daher in gewissen Grenzen bewegen kann. Das Gehäuse 7 ist nun so gestaltet, daß der Block 9, der den Meßfühler 10 enthält, sich darin ebenfalls sowohl in axialer Richtung, bezogen auf die Rolle, deren Papierbahn auf der Mantelfläche abgetastet werden soll, als auch radial, also ebenfalls unter Berücksichtigung der abzutastenden Papierrolle, bewegen kann. Zu diesem Zweck ist der Block 9 mit Zapfen 11 an seinen beiden Enden versehen, die in entsprechend großen Ausnehmungen 12 liegen.

Der Block 9 kann sich also sowohl unter Berücksichtigung der Zeichnung nach oben und unten bewegen als auch nach links und rechts. Das Gehäuse 7 selbst wiederum ist ebenfalls leicht beweglich und stützt sich an einem Zapfen 13 ab, der an einem Block 14 befestigt ist, welcher mit dem Boden 4 verbunden ist. Außerdem sind die seitlichen Längskanten des Gehäuses 7, wie bei 15 gezeigt, mit Rippen versehen, die auf der Manteloberfläche gleiten, aber hinreichend weit von dem Block 9 entfernt sind, so daß sie das Meßergebnis durch Verformung der Manteloberfläche nicht beeinflussen.

Mithin liegt lediglich der Block 9 mit dem Meßfühler mit seinem eigenen Gewicht auf der Manteloberfläche auf, während das Gehäuse 7 mit den Rippen 15 nur die Führung des Blockes mit dem Meßfühler auf der Manteloberfläche übernimmt. Deshalb ist auch das Gehäuse 7 wesentlich länger und breiter als es zur Aufnahme des Blockes 9 erforderlich wäre.

Die elektrischen Signale, die durch den Meßfühler 10 bzw. durch die Hin- und Herbewegung seiner Tastspitze 16 hervorgerufen werden, werden über die elektrische Leitung 17 entsprechenden Wandlern oder Anzeigevorrichtungen oder dgl. zugeführt, die dann ein entsprechendes Profil der Manteloberfläche aufzeichnen. Die Manteloberfläche der Rolle ist in Fig. 2 durch die Linie 22 angedeutet.

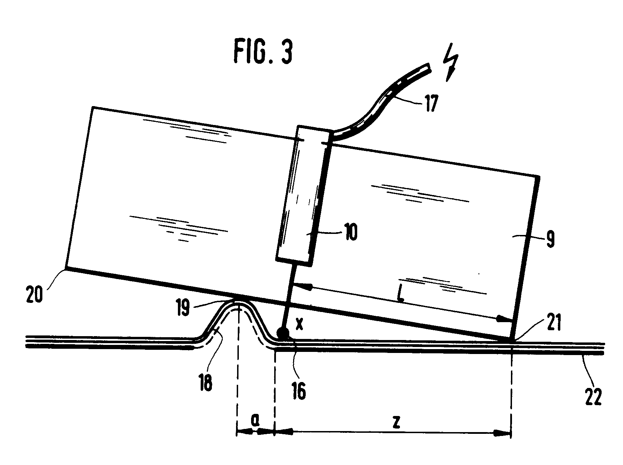

Die Manteloberfläche 22 weist bei 18 eine Wulst auf. Diese Wulst soll nun erfaßt und in ihrer Größe bestimmt werden. Dies geschieht mit der erfindungsgemäßen Vorrichtung dadurch, daß der Block 9 mit dem Meßfühler 10 auf der Manteloberfläche entlangbewegt wird. Die Wulst 18 verläuft in Umfangsrichtung der Rolle (Fig. 3).

Der Meßvorgang hat nun eingesetzt, denn es ist zu erkennen, daß der Block 9 bereits fast zur Hälfte auf dem Scheitel des Wulstes 18 aufliegt. In dem Maße wie sich also der Block unter Berücksichtigung des Pfeiles nach links bewegt, tritt die Tastspitze 16 des Meßfühlers 10 aus dem Block 9 heraus, denn sie ist federbelastet und bleibt mit der Manteloberfläche der Rolle in Berührung.

Bei weiterer Bewegung des Blockes 9 mit dem Meßfühler 10 nach links bewegt sich die Tastspitze 16 wieder in den Block 9 zurück, wenn sie auf der Böschung der Wulst zum Scheitelpunkt 19 der Wulst 18 hinaufgleitet.

Dieser Vorgang läuft nun in umgekehrter Richtung auf der linken Seite der Wulst ab, nachdem der Block 9 quasi nach links gekippt ist, so daß seine Kante 20 nun auf der Manteloberfläche aufliegt, während sich die Kante 21 von der Manteloberfläche 22 trennt.

Wie bereits oben ausgeführt, sind die einzelnen Verdickungen, die beispielsweise durch die Beschichtung des Basispapiers mit schmelzflüssigem Polyethylen entstehen können, auf der Bahn selbst sehr gering, aber bei Erreichung einer bestimmten Dicke wirken sie sich durch die Überdehnung in der Rolle schädlich aus, wenn das emulsionierte Papier später belichtet und entwickelt wird. Deshalb ist die Bestimmung des Wulstes in den einzelnen Papierbahnen nicht möglich, sondern erst dann, wann sich mehrere Bahnen übereinanderlagern und auch die Materialverdickungen sich addieren, beispielsweise nachdem sich die Papierbahn mit z. B. 200 oder mehr Windungen auf die Rolle aufgewickelt hat.

Die Länge L des Blockes 9, d. h. zwischen der Mitte des Blockes, dort wo der Meßtaster aus dem Meßfühler 10 austritt und der Kante des Blockes, sollte wenigstens eine Basisbreite einer sich möglicherweise bildenden Wulst besitzen, so daß der gesamte Block dann die Länge von 2 L hat. Vorzugsweise ist jedoch der Block länger, beispielsweise 4L, was nicht zuletzt von der Art des abzutastenden Materials und auch der Auftragsvorrichtung und dgl. abhängt.

Der Block 9 besteht aus einem geeigneten Material, beispielsweise aus Kunststoff oder Metall und die mit der Manteloberfläche der abzutastenden Rolle in Berührung befindliche Fläche soll möglichst wenig Reibungswiderstand erzeugen, wenn die Vorrichtung über die Manteloberfläche, wie oben beschrieben, hinwegbewegt wird.

Dickenprofiländerungen, beispielsweise in der PE-Beschichtung fotografischer Basispapiere, wirken sich dann besonders schädlich aus, wenn die Höhe bzw. der Böschungswinkel der Wulst, die die Dickenprofiländerung bildet, ein bestimmtes Maß erreichen, so daß Überdehnung stattfinden kann und insbesondere Farbemulsionen bei der Beschichtung auf einer solchen Profiländerung oder Wulst sich in der Dicke verändern, so daß streifenförmige Farbverfälschungen nach der Entwicklung des Papiers deutlich sichtbar werden. Deshalb besteht ein gewisses wünschenswertes Verhältnis zwischen gesamter Blocklänge und Wulsthöhe, wodurch wiederum die Axialbeweglichkeit des Tastfühlers 16 beeinflußt wird. Dieses Verhältnis ist zu erproben, je nach Bestimmungsart oder Verwendungszweck des beschichteten Materials. Für PE-beschichtete fotografische Papiere ergibt sich dieses Verhältnis beispielsweise nach folgenden Gleichugnen

$$\frac{x}{l} = \frac{h}{a + z} \; ; \; z = \sqrt{x^2 + l^2} \; ; \; h = \frac{x}{l} (a + \sqrt{x^2 + l^2})$$

in denen
x die axiale Hubhöhe des Tastfühlers 16 ist,
h die kritische Höhe der möglicherweise entstehenden Wulst 18,
l die halbe Länge des Blockes 9 und
a die halbe Basisbreite der Wulst 18.

## Patentansprüche

1.  Vorrichtung zur Messung kleiner Dickenprofiländerungen in bandförmigem Material, insbesondere in fotografischen Basispapieren mit einem quaderförmigen Block, in dem ein auf- und abbeweglicher Meßfühler angeordnet ist, der mit der Oberfläche des auf eine Rolle aufgewickelten bandförmigen Materials in Berührung ist, dadurch gekennzeichnet, daß der Block (9) seinerseits in einem Gehäuse (7) beweglich und gewichtsentlastet gelagert ist, auf der abzutastenden Oberfläche beiderseits des Meßfühlers in Linienberührung ist und von einem wagenartigen Gestell (1), das über die Manteloberfläche (22) der Rolle in deren axialer Richtung hinwegbewegbar ist, mitgenommen wird.

2.  Vorrichtung nach Anspruch 1, dadurch gekennzeichnet, daß der Meßfühler (1) einstellbar in dem Block (9) angeordnet ist.

3.  Vorrichtung nach Anspruch 1 und 2, dadurch gekennzeichnet, daß die linienförmige Berührung des Blockes (9) mit der abzutastenden Oberfläche durch Ausbildung von Leisten (15) an den Längsrändern des Gehäuses erfolgt.

4.  Vorrichtung nach Anspruch 1 bis 3, dadurch gekennzeichnet, daß das Gehäuse (7) rechteckigen Querschnitt und rechteckigen Grundriß hat und in den einander gegenüberliegenden Stirnwänden Ausnehmungen (12) gebildet sind, in die Zapfen (11) des Blockes (9) mit dem Meßfühler (10) eingreifen.

5.  Vorrichtung nach Anspruch 1 bis 4, dadurch gekennzeichnet, daß ein aus Zapfen (13) und Block (14) bestehender Mitnehmer des wagenartigen Gestells das Gehäuse (7) mitnimmt, wenn das Gestell (1) sich über die Manteloberfläche der Rolle des bandförmigen Materials hinwegbewegt.

## Claims

1.  Device for measuring small changes of the thickness profile in sheet material, especially in photographic base papers, the device comprising an essentially square block, in which is mounted an upwardly and downwardly movable measuring sensor which is in contact with the surface of the sheet material wound on a reel, characterized in that the block (9) in turn is mounted movable in a housing (7) and relieved of weight, is in linear contact with the surface to be sensed on each side of the measuring sensor, and is entrained by a trolley-like frame (1), which is movable over the surface (22) of the reel in its axial direction.

2.  Device according to Claim 1, characterized in that the measuring sensor (10) is mounted adjustably in the block (9).

3.  Device according to Claims 1 and 2, characterized in that the linear contact of the block (9) with the surface to be sensed is effected by the construction of bars (15) at the longitudinal edges of the housing.

5

4. Device according to Claims 1 to 3, characterized in that the housing (7) has a rectangular cross-section and rectangular plan shape and that openings (12) are formed in the mutually opposite end walls, into which openings trunnions (11) of the block (9) together with the measuring sensor (10) engage.

5. Device according to Claims 1 to 4, characterized in that an entraining device of the trolley-like frame, consisting of a pin (13) and block (14), entrains the housing (7) when the frame (1) moves over the cylindrical surface of the reel of sheet material.

**Revendications**

1. Dispositif pour mesurer des petites variations d'épaisseur dans le profil des matériaux en forme de ruban et, en particulier, des papiers de base photographiques avec un bloc en forme de cadre dans lequel est disposé un détecteur de mesure pouvant se soulever et s'abaisser, qui est en contact avec la surface du matériau en forme de ruban bobiné sur un rouleau, caractérisé en ce que le bloc (9) repose,d une part,dans un boîtier (7) en pouvant se déplacer et, en étant déchargé de son poids, est en contact avec la surface à palper de part et d'autre du détecteur de mesure, suivant un contact linéaire et entraîné par un châssis et en forme de chariot, qui peut se déplacer sur la surface cylindrique (22) du rouleau dans la direction axiale de celui-ci.

2. Dispositif selon la revendication 1, caractérisé en ce que le détecteur de mesure (1) est monté avec possibilité de réglage dans le bloc (9).

3. Dispositif selon les revendications 1 et 2, caractérisé en ce que le contact linéaire du bloc (9) avec la surface à palper est réalisé en disposant des lattes (15) sur les bords longitudinaux du boîtier.

4. Dispositif selon les revendications 1 à 3, caractérisé en ce que le boîtier (7) a une section rectangulaire et une forme en plan rectangulaire et que des cavités (12) sont formées dans les parois frontales opposées l'une à l'autre et que des goujons (11) du bloc (9) avec le détecteur de mesure (10) s'engagent dans lesdites cavités.

5. Dispositif selon les revendications 1 à 4, caractérisé en ce qu'un dispositif d'entraînement du châssis en forme de chariot, constitué des goujons (13) et du bloc (14) entraîne le boîtier (7) lorsque le châssis (1) se déplace par dessus la surface cylindrique du rouleau de matériau en forme de ruban.

FIG.1

FIG.2

EP 0 279 173 B1

# FIG. 3